# EUROPÄISCHE PATENTSCHRIFT

(11) **EP 2 806 985 B1**
(45) Veröffentlichungstag und Bekanntmachung des Hinweises auf die Patenterteilung: **16.11.2016**
(21) Anmeldenummer: 13701621.8
(22) Anmeldetag: 25.01.2013
(51) Int. Cl.: B21B 1/46, B21B 45/00

(54) **VERFAHREN ZUR HERSTELLUNG EINES METALLBANDES**
METHOD FOR PRODUCING A METAL STRIP
PROCÉDÉ POUR PRODUIRE UNE BANDE MÉTALLIQUE

(30) Priorität: 25.01.2012 DE 102012201090
(43) Veröffentlichungstag der Anmeldung: 03.12.2014
(73) Patentinhaber: SMS group GmbH, 40237 Düsseldorf (DE)
(72) Erfinder: SEIDEL, Jürgen, 57223 Kreuztal (DE); SUDAU, Peter, 57271 Hilchenbach (DE)
(74) Vertreter: Klüppel, Walter
(86) Internationale Anmeldenummer: PCT/EP2013/051433
(87) Internationale Veröffentlichungsnummer: WO 2013/110754

(56) Entgegenhaltungen:
- EP-A1- 1 375 680
- EP-A2- 0 183 209
- WO-A1-85/03891
- WO-A1-2011/015365
- DE-A1-102006 054 932
- DE-A1-102008 029 581
- DE-A1-102008 055 650
- US-A- 4 182 146
- US-A- 4 918 960
- US-A- 5 307 864

## Beschreibung

Die Erfindung betrifft ein Verfahren zur Herstellung eines Metallbandes in einer Anlage, umfassend eine Stranggießanlage, einen sich in Förderrichtung anschließenden ersten Ofen, einen sich in Förderrichtung an den ersten Ofen anschließenden zweiten Ofen und ein sich in Förderrichtung an den zweiten Ofen anschließendes Walzwerk.

Anlagen zur Herstellung von Metallbändern in der genannten Art sind im Stand der Technik bekannt.

Aus der EP 1 960 131 B1 ist es bekannt, einen Halteofen und einen Induktionsofen zur Erwärmung von Brammen in Abhängigkeit einer gewählten Betriebsart, nämlich einmal bei kontinuierlicher Herstellung eines Metallbandes und einmal bei der diskontinuierlichen Herstellung des Bandes, zu aktivieren bzw. zu deaktivieren.

Die EP 1 963 034 B1 sieht zur Erwärmung einer Bramme einen Induktionsofen vor, dessen Arbeitsfrequenz so niedrig gewählt wird, dass die Erwärmungswirkung auf den Brammenkern konzentriert wird.

Die DE 10 2008 055 650 A1 beschreibt ein Verfahren zur Minimierung des Energiebedarfs und des CO₂-Ausstoßes bei Dünnbrammenanlagen, wobei Rechenmodelle eingesetzt werden, mit denen insbesondere die für die Kühlung notwendige Wassermenge und deren Verteilung in der Anlage sowie die Gießgeschwindigkeit ermittelt werden.

Der kombinierte Einsatz eines Halteofens und eines Induktionsofens ist auch aus der EP 1 469 954 B2 und aus der US 7 942 191 B2 bekannt.

Bei der Herstellung von Warmband in einer sog. CSP-Anlage wird zunächst die Dünnbramme in einer Stranggießanlage gegossen, dann in einem Rollenherdofen auf die gewünschte Ofentemperatur erwärmt und unmittelbar danach in der Fertigstraße (Walzwerk) auf die Fertigbanddicke herunter gewalzt. Beim Nachheizen der Dünnbramme im Rollenherdofen wird Heizenergie (beispielsweise in Form von Gas) und bei der Dickenreduktion in der Fertigstraße Strom für die Umformung benötigt. Die notwendige Ofentemperatur hängt dabei im Wesentlichen von der zu walzenden Enddicke und Bandbreite sowie vom Bandmaterial ab.

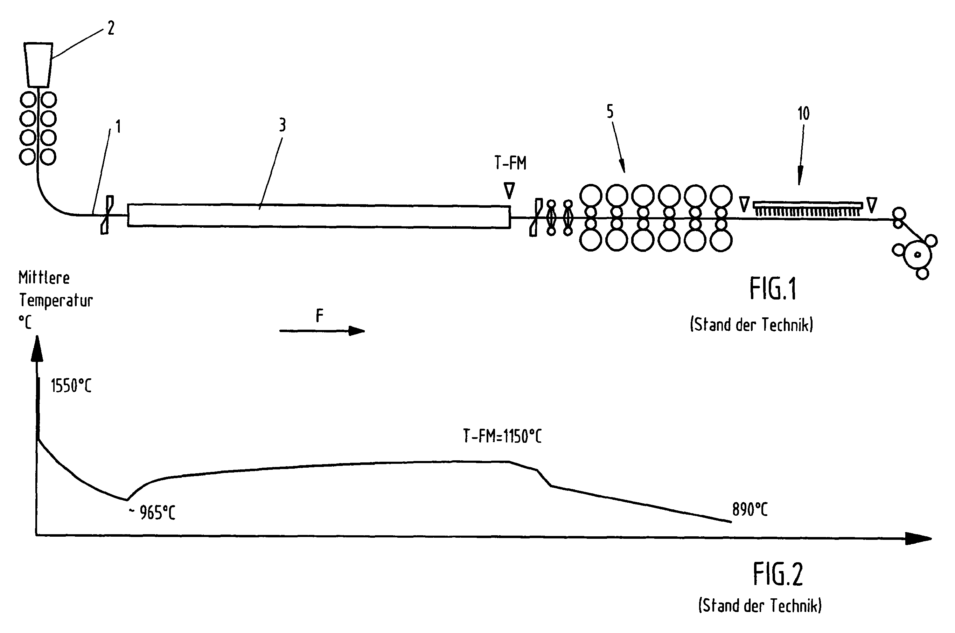

Die Bänder mit niedriger Enddicke oder hoher Belastung in der Fertigstraße bestimmen dabei vornehmlich das maximale Ofentemperaturniveau (z. B. 1.150 °C). Diese Extrembänder stellen jedoch oft nur einen kleineren Produktionsanteil dar. Innerhalb eines Walzprogramms oder innerhalb eines Tages werden unterschiedliche Bänder gewalzt. Eine Vielzahl der Bänder benötigt nicht die hohe Eintrittstemperatur. D. h., diese Bänder werden überheizt. Hier könnte Heizenergie eingespart werden. Ein Rollenherdofen kann jedoch nicht beliebig auf jedes Band eingestellt und die Fertigstraßen-Eintrittstemperaturen (T-FM; definiert als mittlere Brammentemperatur nach der Aufheizung bzw. hinter dem letzten Ofen vor der Fertigstraße) individuell verändert werden. Wegen der Trägheit des Rollenherdofens bleibt deshalb die Ofentemperatur auf im Wesentlichen gleich hohem Niveau. Der typische konzeptionelle Aufbau einer solchen vorbekannten CSP-Anlage geht aus Fig. 1 hervor, der Verlauf der mittleren Temperatur über der Anlagenlänge, d. h. von der Stranggießanlage bis hinter die Fertigstraße ist aus Fig. 2 ersichtlich.

In Fig. 1 ist eine Anlage skizziert, die eine Stranggießanlage 2 umfasst, in der eine Bramme 1 gegossen wird. Die Bramme 1 gelangt in einen Rollenherdofen 3, wo sie auf eine Eintrittstemperatur T_{FM} erhitzt wird. Die Bramme hat hier z. B. eine Dicke von 60 mm und bewegt sich in Förderrichtung F je nach Randbedingung mit einer Geschwindigkeit von 4 - 8 m/min. Der Rollenherdofen ist z. B. 240 m lang. Mit der Temperatur T_{FM} hinter dem Ofen wird danach die Bramme 1 in das Walzwerk 5 (Fertigstraße) geleitet und zum Band gewünschter Dicke herunter gewalzt, z. B. auf einen Wert von 2,4 mm. Anschließend gelangt das Band auf eine Kühlstrecke 10.

Der korrespondierende Temperaturverlauf ergibt sich aus Fig. 2. Zu sehen ist hier, dass die Eintrittstemperatur T_{FM} bei 1.150 °C liegt.

Die aufgewendeten Energien im Rollenherdofen und für die Umformung in der Fertigstraße (von beispielsweise 60 mm Brammendicke nach der Stranggießanlage auf 2,4 mm Endbanddicke) sowie die CO₂-Emissionen und Energiekosten können für ein Beispiel mit einer Eintrittstemperatur T_{FM} von 1.150 °C wie folgt angegeben werden (der Energieverbrauch der Hilfsaggregate wie Zunderwäscherpumpen, Pumpen für die Walzenkühlung etc. wurde nicht berücksichtigt):
Der Rollenherdofen mit wassergekühlten Rollen benötigt eine Heizenergie von 178,1 kWh/t. Die Heizkosten liegen bei 5,34 €/t, die CO₂-Emission bei 41,0 kg CO₂/t. In der Fertigstraße werden für die Umformung benötigt eine Umformenergie von 47,8 kWh/t bei Stromkosten von 3,35 €/t und einer CO₂-Emission von 26,8 kg CO₂/t. In Summe ergibt sich ein Energiebedarf von 225,9 kWh/t bei Kosten von 8,69 €/t und einer CO₂-Emission von 67,7 kg CO₂/t.

Der Oberbegriff von Anspruch 1 basiert auf der WO 2011/015365. Der Erfindung liegt die Aufgabe zugrunde, ein Verfahren der eingangs genannten Art vorzuschlagen, mit dem es möglich ist, den Energieverbrauch bei der Herstellung eines Metallbandes, insbesondere bei der Warmbandherstellung in einer Gieß-Walz-Anlage (CSP-Anlage), weiter zu reduzieren und so nicht nur Kosten einzusparen, sondern auch den CO₂-Ausstoß zu reduzieren.

Die Lösung dieser Aufgabe durch die Erfindung ist verfahrensgemäß dadurch gekennzeichnet, dass das Verfahren die Schritte aufweist:
a) Festlegen eines herzustellenden Produktionsumfangs an Metallbrammen oder Metallbändern während eines definierten Produktionszeitraums, umfassend mindestens zwei unterschiedliche Metallbrammen oder Metallbänder;
b) Bestimmung der jeweiligen Eintrittstemperaturen in das Walzwerk für zumindest einen Teil, vorzugsweise für alle zu produzierenden Metallbrammen oder Metallbänder des definierten Produktionszeitraums;
c) Bestimmung einer Austrittstemperatur aus dem ersten Ofen, wobei diese geringer gewählt wird als die höchste in Schritt b) bestimmte Eintrittstemperatur in das Walzwerk und kleiner oder im wesentlichen gleich groß gewählt wird als die niedrigste in Schritt b) bestimmte Eintrittstemperatur in das Walzwerk;
d) Betrieb des ersten Ofens in einer solchen Weise, dass die zu fertigenden Metallbrammen oder Metallbänder mit der gemäß Schritt c) bestimmten Austrittstemperatur den ersten Ofen verlassen;
e) Erhitzen bzw. Nachheizen einer zu fertigenden Metallbramme oder eines zu fertigenden Metallbandes mittels des zweiten Ofens auf seine benötigte Eintrittstemperatur in das Walzwerk, sofern diese Temperatur über der Austrittstemperatur des ersten Ofens liegt, der gemäß Schritt d) erreicht wurde.

In obigem Schritt c) kann die Austrittstemperatur aus dem ersten Ofen im wesentlichen gleich groß gewählt werden wie die niedrigste in Schritt b) bestimmte Eintrittstemperatur in das Walzwerk. Unter im wesentlichen gleich groß ist dabei insbesondere zu verstehen, dass lediglich geringfügigen Temperaturänderungen (Abkühlung) hinter dem ersten Ofen, d. h. im Bereich des zweiten Ofens in dessen deaktiviertem Zustand, Rechnung getragen wird.

Besagter Schritt c) bestimmt also die Austrittstemperatur aus dem ersten Ofen derart, dass die maximale Eintrittstemperatur in das Walzwerk mit dem zweiten Ofen - unter Berücksichtigung der maximalen Ofenleistung des zweiten Ofens - eingestellt wird (der zweite Ofen muss also jedenfalls bei maximal möglicher Ofenleistung ausgehend von der Austrittstemperatur des ersten Ofens die maximale Eintrittstemperatur in das Walzwerk erreichen können).

Die genannten Schritte b) und c) können auch iterativ optimiert werden, wozu sie in umgekehrter Reihenfolge erfolgen können.

Vorgesehen kann werden, dass als erster Ofen ein Rollenherdofen verwendet wird und/oder dass als zweiter Ofen ein Induktionsofen oder ein DFI-Ofen (Direct Flame Impingement - Ofen) oder eine Kombination von Induktionsofen und DFI-Ofen verwendet wird, d. h. eine Ofengruppe.

Der erste Ofen kann dabei so betrieben werden, dass die Austrittstemperatur der Metallbramme oder des Metallbandes maximal 1.125 °C beträgt. Im ersten Ofen werden vorzugsweise energiesparende trockene Ofenrollen verwendet.

Der zweite Ofen (bzw. Ofengruppe) wird bevorzugt so betrieben, dass die Temperaturerhöhung der Metallbramme oder des Metallbandes maximal 100 °C beträgt. Hierdurch kann eine kurze Nachheizstrecke (Induktionsheizstrecke) von weniger als ca. 10 m erreicht werden.

Der erste Ofen kann als Brammenspeicherofen verwendet werden.

Der erreichbare Temperaturgradient des ersten Ofens ist vorzugsweise kleiner als der erreichbare Temperaturgradient des zweiten Ofens. D. h, dass sich der zweite Ofen (bzw. die Ofengruppe) durch eine hohe Heizgeschwindigkeit bzw. eine hohe Temperaturdynamik auszeichnet, mit dem eine Brammen auf relativ kurzer Strecke individuell erwärmt werden kann.

Die Austrittstemperaturen aus dem ersten Ofen und die Eintrittstemperaturen in das Walzwerk werden gemäß einer Weiterbildung iterativ dergestalt festgelegt, dass die Energiekosten und/oder CO₂-Emissionen und/oder Energieverbräuche für die Herstellung von Warmbändern in der Summe für den ersten Ofen und zweiten Ofen und das Walzwerk im definierten Produktionszeitraum minimal werden.

Die Bestimmung der Eintrittstemperaturen in das Walzwerk gemäß obigem Schritt b) und/oder die Bestimmung der Austrittstemperaturen aus dem ersten Ofen gemäß obigem Schritt c) und/oder der Energieverbrauch und/oder die CO₂-Emissionen und/oder die Energiekosten für alle zu produzierenden Metallbrammen oder Metallbänder kann mittels eines Rechenmodells erfolgen. Hierbei kann insbesondere vorgesehen werden, dass als Teilzielgröße bei der Berechnung zur Minimierung von Energiekosten und/oder CO₂-Emissionen und/oder Energieverbräuchen die Minimierung der Eintrittstemperatur in das Walzwerk verwendet wird. Hierfür kann auch die minimale Ofenaustrittstemperatur des ersten Ofens verwendet werden. Weiterhin kann die Minimierung der Temperatursteigerung im zweiten Ofen verwendet werden.

Im Rechenmodell werden dabei vorzugsweise bei der Festlegung der optimalen Austrittstemperaturen aus dem ersten Ofen und Eintrittstemperaturen in das Walzwerk die Prozess- und Anlagenlimits entsprechend berücksichtigt.

Als erster Ofen kann auch ein DFI-Ofen (Direct Flame Impingement - Ofen) verwendet werden.

Als erster Ofen und/oder als zweiter Ofen kann ferner ein DFI-Ofen (Direct Flame Impingement - Ofen) verwendet werden, dessen Brenner und/oder Brennereinstellungen und/oder Flammenabstand von der Brammenoberfläche so gewählt werden, dass keine Aufschmelzungen des Zunders oder des Brammenmaterials an der Brammenoberfläche auftreten. Als erster Ofen und/oder als zweiter Ofen kann auch ein DFI-Ofen verwendet werden, dessen Brenner ausgebildet sind, die Bramme über die gesamte Breite gleichmäßig zu erhitzen, wozu die Brenner vorzugsweise durchgehend über ihrer Breite als Rechteckdüsen ausgebildet sind. Alternativ ist es möglich, dass als erster Ofen und/oder als zweiter Ofen ein DFI-Ofen verwendet wird, dessen Brenner in Förderrichtung mehrreihig ausgebildet sind, wobei die Brenner von Reihe zu Reihe versetzt angeordnet sind, wodurch sie in der Summe über der Breite eine gleichmäßige Erwärmung des Metallbandes hervorrufen.

Die Metallbramme oder das Metallband wird vor dem ersten Ofen gemäß einer Weiterbildung einer Vorwalzoperation unterzogen.

Der erste Ofen kann in zwei Teilöfen unterteilt sein, wobei dann die Metallbramme oder das Metallband zwischen den beiden Teilöfen einer Walzoperation unterzogen wird.

Im Falle der Nichtbenutzung des zweiten Ofens oder zumindest von einzelnen Modulen des Ofens kann dieser bzw. können diese aus der Produktionslinie herausbewegt werden und an seine bzw. ihre Stelle eine Rollgangskapselung verbracht werden.

Eine Anlage zur Herstellung einer Metallbramme oder eines Metallbandes, umfassend eine Stranggießanlage, einen sich in Förderrichtung anschließenden ersten Ofen, ein sich in Förderrichtung an den ersten Ofen anschließenden zweiten Ofen in Form eines Induktionsofens und ein sich in Förderrichtung an den Induktionsofen anschließendes wobei der Induktionsofen eine Anzahl in Förderrichtung beabstandeter Induktionsspulen aufweist, wobei im Bereich der Induktionsspulen Wärmedämmmittel angeordnet sind.

Vor und/oder hinter und/oder zwischen den Induktionsspulen können zumindest abschnittsweise Wärmedämmkassetten angeordnet sein.

Vor und/oder hinter und/oder zwischen den Induktionsspulen können weiterhin zumindest abschnittsweise wärmegedämmte Rollgangsrollen angeordnet sein. Die Induktionsspulen können an der der Metallbramme oder dem Metallband zugewandten Seite mit mindestens einer Dämmplatte oder Dämmmatte versehen sein.

Die Wärmedämmkassetten, die wärmegedämmten Rollgangsrollen und/oder die Dämmplatten können aus Keramikfaser-Material bestehen, wobei dieselben vorzugsweise mit einem dünnen temperaturbeständigen Blech verkleidet sind.

Weiterbildungsgemäß können Dämmhauben vorgesehen sein, wobei die Induktionsspulen und die Dämmhauben mit Bewegungsmitteln in Verbindung stehen, so dass im Falle der Nichtnutzung der Induktionsspulen diese aus der Produktionslinie herausbewegt werden können und an deren Stelle die Dämmhauben eingeschoben werden können.

Ferner können Mittel vorhanden sein, mit denen mindestens eine Dämmhaube jedenfalls zeitweise mit einer Rüttelbewegung beaufschlagt werden kann, wobei die Rüttelbewegung vorzugsweise quer zur Förderrichtung der Metallbramme oder des Metallbandes gerichtet ist. Damit kann das Abrutschen des herabgefallenen Zunders begünstigt werden.

Die Dämmhaube kann dabei trichterförmig ausgebildet sein.

Gemäß einer Weiterbildung ist vorgesehen, dass die Mittel zur Beaufschlagung mit einer Rüttelbewegung durch die Bewegungsmittel für die Dämmhaube verwirklicht sind, wobei diese vorzugsweise ausgebildet sind für eine sprungförmige Änderung der Bewegungsgeschwindigkeit. Demgemäß wird der Querantrieb für die Dämmhaube auch gleichzeitig für das Rütteln der Dämmhaube genutzt. Möglich ist auch die Bewegung der Dämmhaube durch die Bewegungsmittel, wobei die Dämmhaube auf einer unebenen Bahn verschoben und somit gerüttelt wird.

Schließlich können auch Mittel zum vorzugsweise periodischen Abblasen der Dämmhaube vorhanden sein. Auch hierdurch kann effizient der Zunder beseitigt bzw. entfernt werden, indem beispielweise jeweils nach Ablauf einer vorgegebenen Zeit die unteren Dämmhauben mit Pressluft abgeblasen werden.

Um also flexibel die Ofentemperaturen unmittelbar vor Eintritt in das Walzwerk einstellen zu können, wird hinter dem Rollenherdofen zusätzlich eine kurze Induktionsheizung angeordnet.

Bei Nichtnutzung der (temperaturgedämmten) Induktionsheizung kann diese oder deren einzelnen Module (Induktoren) quer aus der Produktionslinie bewegt und an deren Stelle eine optimal gedämmte Rollgangskapselung geschoben werden. Für die Verschiebung der Induktoren und Dämmhauben können gleiche oder separate Bewegungsmittel verwendet werden.

Die Erfindung führt in vorteilhafter Weise somit zu einer Minimierung des Energieverbrauchs und somit der Energiekosten sowie zu einer Reduzierung der CO₂-Emissionen durch eine angepasste Einstellung der Fertigstraßen-Eintrittstemperatur sowie zu einer optimale Austrittstemperatur aus dem ersten Ofen.

Zur Anwendung des Verfahrens wird bevorzugt ein Rechenmodell zur Einstellung einer optimalen bzw. minimalen Rollenherdofen-Austrittstemperatur und Fertigstraßen-Eingangstemperatur und schließlich eines minimalen Energieverbrauchs bzw. einer minimalen CO₂-Emission bzw. minimaler Energiekosten abhängig von den Randbedingungen des Heizprozesses, des Walzprozesses und der Kühlstrecke eingesetzt. Dabei erfolgt eine Berücksichtigung der Prozess- und Anlagenlimits.

Die Induktionsheizung oder der DFI-Ofen stellt ein hochdynamisches Stellglied dar, mit dem von Band zu Band eine wesentliche Temperaturveränderung erzielt werden kann; dem gegenüber bildet der Rollenherdofen ein niederdynamisches Stellglied, das Temperaturänderungen unter Umständen erst über längere Zeit bewirken kann. Besagter Rollenherdofen wird erfindungsgemäß eingesetzt, um vorzugsweise eine minimale Brammenspeicher-Temperatur einzustellen, während die Induktionsheizung oder der DFI-Ofen die vorzugsweise minimale Zieltemperatur vor der Fertigstraße (Fertigstraßen-Einlauftemperatur) einstellt.

Eine gedämmte Induktionsheizstrecke und ein DFI-Ofen ermöglichen eine höherdynamische Aufheizung bei gleichzeitiger optimaler Wärmedämmung und somit eine hocheffiziente Erwärmung.

Bevorzugt erfolgt ein Anstoßen des Optimierungsalgorithmus zur Bestimmung der Temperatur des Rollenherdofens und zur Nutzung der Induktionsheizung für jedes Band oder/und für eine längere Produktionsperiode (Walzprogramm, Tag, maximaler Änderungszeitraum für die Temperatur des Rollenherdofens) in Form einer Vorausberechnung.

Auch ein kombinierter Einsatz von Energie sparenden Ofenrollen (vorzugsweise trockene Ofenrollen, d. h. Ofenrollen ohne Innenkühlung mittels eines Kühlmediums) bei niedriger Ofentemperatur von weniger als 1.125 °C (im Rollenherdofen) und induktive Nachheizung der Bramme (bzw. des Vorbandes) auf vorzugsweise minimale Fertigstraßen-Eintrittstemperaturen T-FM ist vorteilhaft möglich.

Zur Verminderung von Temperaturverlusten erfolgt bevorzugt der Einsatz der Induktionsheizung zum Nachheizen der Bänder, bei Nichtnutzung allerdings eine Kapselung der gesamten Induktionsheizung oder Teile der Induktionsheizungsbereiche.

Statt des ersten Ofens, der beispielsweise als Rollenherdofens ausgebildet ist, kann auch (alternativ oder partiell) eine passive oder aktive Rollgangskapselung oder ein Hubbalkenofen eingesetzt werden.

Als weiterer Optimierungsparameter zur Minderung des Energieverbrauchs und Energiekosten wird bevorzugt die Gießdicke berücksichtigt.

In der Zeichnung sind Ausführungsbeispiele der Erfindung dargestellt. Es zeigen:
- Fig. 1: schematisch die Seitenansicht einer Anlage zur Herstellung einer Metallbramme oder eines Metallbandes nach dem Stand der Technik, mit den Hauptkomponenten Stranggießanlage, Rollenherdofen und Fertigstraße,
- Fig. 2: den Verlauf der Temperatur in der Bramme bzw. im Band über den Verlauf der Anlage nach Fig. 1,
- Fig. 3: schematisch die Seitenansicht einer einfindungsgemäßen Anlage zur Herstellung einer Metallbramme oder eines Metallbandes,
- Fig. 4: den Verlauf der Temperatur in der Bramme bzw. im Band über den Verlauf der Anlage nach Fig. 3, wobei der Temperaturverlauf für zwei unterschiedliche Brammen bzw. Bänder dargestellt ist (einmal mit ausgezogenen Linien und einmal mit punktierter Linie),
- Fig. 5: schematisch ein Fertigungsprogramm mit einer Anzahl von Bändern, wobei die Fertigbanddicke für die einzelnen Bänder angegeben ist,
- Fig. 6: die für die einzelnen Bänder aus Fig. 5 benötigten Eintrittstemperaturen T_{FM} in die Fertigstraße,
- Fig. 7: eine Übersicht über die Energiekosten beim Einsatz des erfindungsgemäßen Verfahrens für ein Beispiel mit wassergekühlten Ofenrollen im Rollenherdofen und für ein Beispiel mit trockenen Ofenrollen,
- Fig. 8: schematisch die Seitenansicht einer Anlage zur Herstellung einer Metallbramme oder eines Metallbandes gemäß einer alternativen Ausgestaltung,
- Fig. 9: schematisch die Seitenansicht einer Anlage zur Herstellung einer Metallbramme oder eines Metallbandes gemäß einer weiteren alternativen Ausgestaltung,
- Fig. 10: schematisch die Seitenansicht eines geschnitten dargestellten Induktionsofens nach dem Stand der Technik,
- Fig. 11: schematisch die Seitenansicht eines geschnitten dargestellten Induktionsofens mit einer erfindungsgemäßen Ausgestaltung,
- Fig. 12: schematisch in der Darstellung gemäß Fig. 11 den Induktionsofen, wobei hier jedoch teilweise die Induktoren durch Dämmhauben ausgetauscht wurden,
- Fig. 13: den Verlauf der Temperatur in der Bramme bzw. im Band über den Verlauf der Anlage gemäß einer alternativen Betriebsweise,
- Fig. 14: schematisch das Rechenmodell für den energieoptimalen Betrieb der Anlage und
- Fig. 15: schematisch einen Ablaufplan des Optimierungsmodells.

In den Figuren ist - wie oben bereits erläutert - eine Anlage zur Herstellung eines Metallbandes 1 zu sehen. Die Anlage umfasst eine Stranggießanlage 2 und einen in Förderrichtung F folgenden ersten Ofen 3 in Form eines Rollenherdofens. An diesen schließt sich ein zweiter Ofen 4 in Form eines Induktionsofens an. An den zweiten Ofen schließt sich in Förderrichtung F ein Walzwerk (Fertigstraße) an. Hinter dem Walzwerk 5 ist eine Kühlstrecke 10 angeordnet.

Um für jedes Band individuell eine gesamt-energieoptimale Temperatur vor der Fertigstraße T_{FM} einstellen zu können, ist verfahrensgemäß vorgesehen, die Heizarbeit für die Dünnbramme entsprechend aufzuteilen. Der Rollenherdofen 3 erwärmt die Dünnbramme 1 dabei nur so weit, dass dies für die meisten Bänder ausreicht (z. B. auf 1.000 bis 1.050 °C). Nur die extremen Bänder, d. h. dünne Bänder oder besonders hochfeste Bänder bzw. Bänder, die die Fertigstraße stark belasten, oder wenn hohe Endwalztemperaturen sicher gestellt werden sollen, werden induktiv individuell auf eine höhere Fertigstraßen-Eintrittstemperatur T-FM erwärmt. Die Erwärmung erfolgt also nur so weit, wie dies aus belastungs- oder walztechnologischen Gründen notwendig ist.

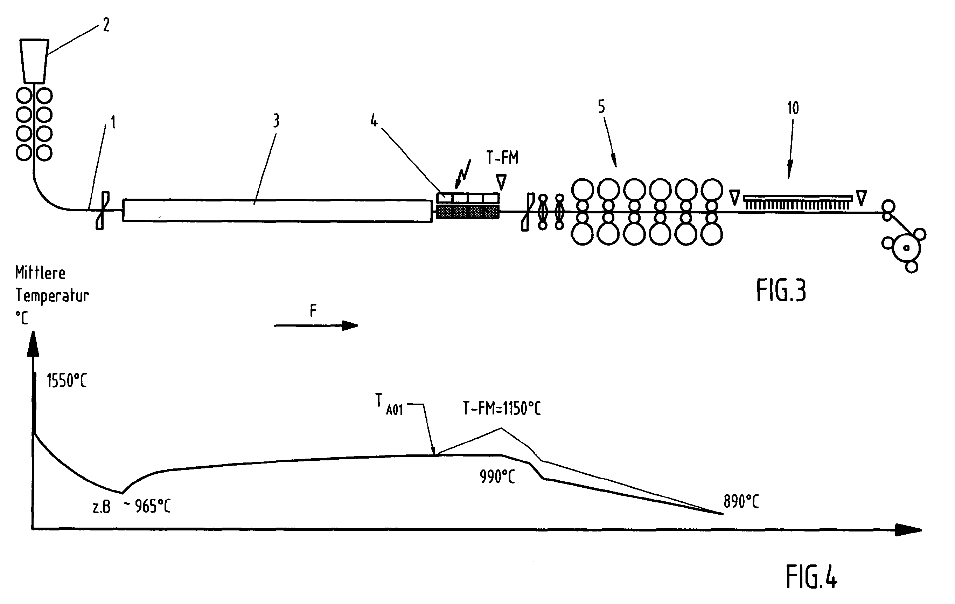

Ein niedrigeres Temperaturniveau führt zum Anstieg der Umformenergie. Der Anstieg der Umformenergie ist jedoch wesentlich niedriger als die eingesparte Heizenergie im Rollenherdofen 3 und ggf. in der Induktionsheizung 4. In Fig. 3 ist eine CSP-Anlage mit Rollenherdofen 3 und anschließender Induktionsheizung 4 dargestellt. Der Temperaturverlauf gemäß Fig. 4 zeigt mögliche Fahrweisen vor allem im Bereich der Induktionsheizung 4 und der Fertigstraße 5. Im Vergleich zu Fig. 1 bzw. Fig. 2 (gemäß dem Stand der Technik) wurde die Temperatur des Rollenderdofens auf z. B. 1.000 °C abgesenkt. Für viele Bänder reicht die sich daraus ergebende Fertigstraßen-Eingangstemperatur T-FM von ca. 990°C aus, und ist so nahezu gleich groß wie die Austrittstemperatur T_{AO1} aus dem ersten Ofen (Rollenherdofen 3) wenn z. B. im Bereich des deaktivierten zweiten Ofens (Induktionsofens 4) etwas Wärme/Temperatur an die Umgebung verloren geht. Da die Fertigstraße 5 in diesem Ausführungsbeispiel im Batch-Mode betrieben wird, wird hier etwas schneller gewalzt.

In Fig. 4 ist eine häufige Fahrwiese mit ausgezogener Linie angegeben, eine seltenere Fahrweise (mit höheren Temperaturen) ist mit gepunkteter Linie angegeben.

Die Summe der verbrauchten Energien, die Energiekosten und CO₂-Emissionen sinken entsprechend. Wird die maximal Temperatur von z. B. T-FM = 1.150 °C durch induktives Heizen eingestellt (siehe den punktierten Temperaturverlauf in Fig. 4), ergibt sich ebenfalls eine Verminderung des Energieverbrauchs im Vergleich zum Zustand gemäß Fig. 1 bzw. Fig. 2. Die Energiekosten sowie CO₂-Emissionen steigen jedoch, weil Strom teuer bzw. keine Primärenergie ist. Diese Temperatur wird jedoch selten eingestellt.

Die Einstellung der optimalen bzw. minimalen Fertigstraße-Eintrittstemperatur erfolgt also für das dargestellte Beispiel mit Hilfe der Induktionsheizung und des Rollenherdofens. Statt der dargestellten Induktionsheizung kann alternativ auch ein leistungsstarker Ofen, wie beispielsweise ein DFI-Ofen, eingesetzt werden, um einen ähnlichen Effekt zu erreichen.

Für die Minimierung der Energiekosten und des Energieverbrauchs sowie der CO₂-Emissionen ist es daher das Ziel, die Fertigstraßen-Eintrittstemperatur T-FM im Rahmen des erwähnten Limits zu optimieren und in vielen Fällen zu minimieren. Als Stellglied für die Optimierung (Minimierung) werden als niederdynamisches Stellglied die Austrittstemperatur des Rollherdofens 3 und als hochdynamisches Stellglied die Induktionsheizung 4 eingesetzt, die von Band zu Band oder auch über der Bandlänge individuell reagieren kann.

Diese Optimierung wird mit einem Rechenmodell durchgeführt. Hiermit werden die Gesamtenergiekosten, die CO₂-Emissionen und der Energieverbrauch für jedes Band in einem definierten Produktionszeitraum ermittelt. Variiert werden die Ofentemperatur aus dem ersten Ofen T_{AO1} sowie die Fertigstraßen-Eintrittstemperatur T-FM in der Art, dass sich iterativ ein optimaler (minimaler) Verbrauch einstellt. Häufig wird für jedes Band vorzugsweise die minimale Fertigstraßen-Eintrittstemperatur T-FM ermittelt. Für die Berechnung berücksichtigt das Stichplanmodell die maximal zulässigen Geschwindigkeiten bzw. Drehzahlen, die maximal zulässigen Walzkräfte, Walzmomente und Motorbelastungen und prüft, ob die Bandprofile und Planheiten sowie die gewünschten Materialeigenschaften (Gefüge, Auflösung der Mikrolegierungselemente) in Ordnung sind. Weiterhin prüft ein Kühlstreckenmodell, ob beispielsweise die Wassermengen ausreichend sind.

Allgemein gesagt, werden die Prozess- und Anlagengrenzwerte überprüft und so der minimale Energieverbrauch oder die minimalen CO₂-Emissionen oder die minimalen Energiekosten festgelegt. Diese Berechnungen können unmittelbar vor jedem Walzen oder/und im Vorfeld für eine längere Produktionsperiode (z. B. für ein Walzprogramm oder für einen Tag oder für den maximalen Änderungszeitraum der Temperatur des Rollenherdofens) im Voraus durchgeführt werden.

Als Ergebnis ergeben sich die optimalen Temperaturen bzw. der Gasbedarf für den Rollenherdofen 3 und für die zu wählende Leistung der Induktionsheizung 4 in Abhängigkeit der Einzugsgeschwindigkeit, der Brammendicke, der Breite und des Materials. Die Wahl der geeigneten optimalen Temperatur des Rollenherdofens 3 ist auch von der Ofeneintrittstemperatur und von der Wahl der Brammendicke oder den eventuell vorhandenen Vorgerüsten abhängig, was ebenfalls berücksichtigt werden muss und die Energiebilanz beeinflusst. Der Optimierungsalgorithmus ist mit dem Gießmaschinenmodell, dem Ofenmodell, dem Modell, das die Wirkung der Induktionsheizung beschreibt, dem Stichplanmodell, dem Profil- und Planheitsmodell sowie dem Kühlstreckenmodell verknüpft und wird als übergeordnetes Level 2.5-Modell verstanden.

Generell sei angemerkt, dass alternativ zum Induktionsofen 4 - der bevorzugt ist - auch ein an die Brammenerwärmung angepasster DFI-Ofen (Direkt Flame Impingement - Ofen - direkte Flammenbeaufschlagung) eingesetzt werden kann, wo die Bramme bzw. das Band mit direkter optimierter Flammenbeaufschlagung, ohne Brammenoberflächenaufschmelzungen zu erzeugen, erhitzt wird. Bei diesem sog. Oxyfuel-Ofen mit dem DFI-Oxyfuel-Verfahren handelt es sich um einen speziellen Ofen, bei dem reiner Sauerstoff statt Luft und gasförmiger oder flüssiger Brennstoff gemischt und die Flamme direkt in Richtung des Bandes bzw. in Richtung der Dünnbramme gerichtet werden. Dies optimiert nicht nur den Brennvorgang sondern reduziert auch die Stickstoffoxid-Emissionen. Mit diesem Heizverfahren lassen sich auch hohe Wärmedichten bei gutem Wirkungsgrad erzielen.

Um eine möglichst gleichmäßige Erwärmung über der Brammenbreite zu erzeugen, sind die Brenner des DFI-Ofens in Förderrichtung von Reihe zu Reihe versetzt angeordnet oder die Brenner sind als Rechteckdüsen über der gesamten Breite ausgebildet.

Es werden die Parameter Energie, Stromkosten und CO₂-Emissionen für den Rollenherdofen 3, die Induktionsheizung 4 und Umformung in der Walzstraße 5 und ggf. 11 ermittelt und aufsummiert und die Ofentemperaturen und Temperaturerhöhung in der Induktionsheizung bzw. die Temperatur T-FM so eingestellt, dass sich ein optimales Ergebnis in Summe für obige Parameter ergibt.

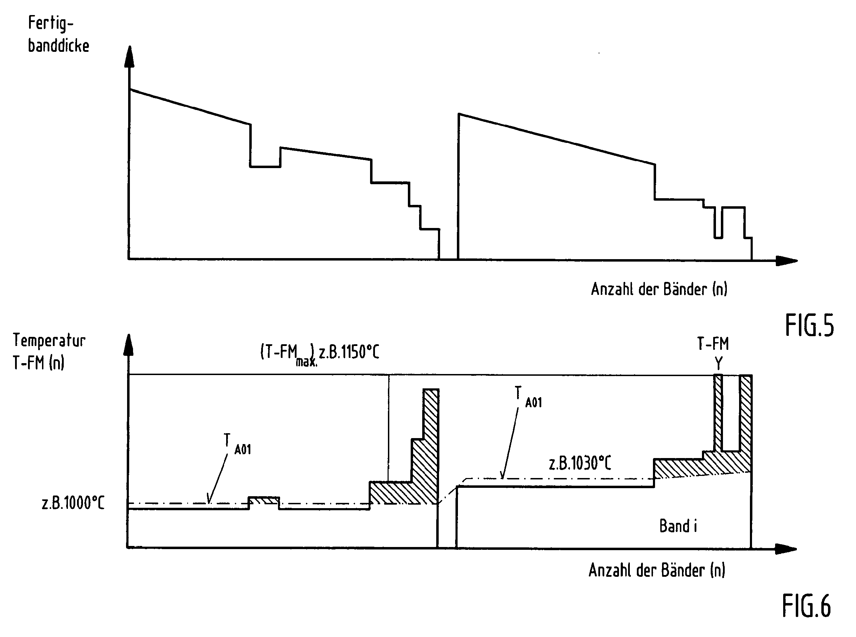

Wie das Ergebnis der Optimierung sowie der Verlauf der Temperatur am Austritt des Rollenherdofens 3 und für die Fertigstraßen-Einlauftemperatur T-FM über eine Anzahl von Bändern prinzipiell aussehen kann, zeigt das Beispiel gemäß Fig. 5 und Fig. 6. Die Belastung der Fertigstraße wird stellvertretend für andere Parameter hier beispielsweise mit der Banddicke ausgedrückt. Bei dickeren Bändern wird die Ofentemperatur nicht weiter erhöht und direkt ohne Aktivierung der Induktionsheizung 4 gewalzt. Die Ofentemperatur liegt bei z. B. 1.000 °C. Sind langfristig dünnere Bänder in der Walzprogrammplanung, so wird die Ofentemperatur entsprechend angepasst (z. B. auf 1.030 °C); s. hierzu die gepunktete Linien in Fig. 6. Ein induktives Nachheizen einzelner dünner Bänder oder Bändergruppen auf mehr als 1.000 °C bis 1.150 °C (maximal benötigte Temperatur) wird nur bei Bedarf durchgeführt (siehe schraffierten Bereich in Fig. 6). Optimal wird also dabei die Ofentemperatur T_{AO1} abhängig vom Produkt-Mix so festgelegt, dass ein hoher Produktionsanteil nicht mehr induktiv nachgeheizt werden muss.

Aus Fig. 6 geht hervor, dass im Bereich zwischen der Temperatur des Rollenherdofens (hier: ca. 1.000 °C bzw. später 1.030 °C) und der maximal benötigten Temperatur T-FM von hier 1.150 °C (s. gestrichelte Linie in Fig. 6; bei Bändern, die nicht höherer Temperaturen benötigen, ist die Induktionsheizung nicht aktiv) ein Überheizen vermieden wird. Das Nachheizen erfolgt nur für einige Bänder per Induktionsheizung (schraffierten Bereiche).

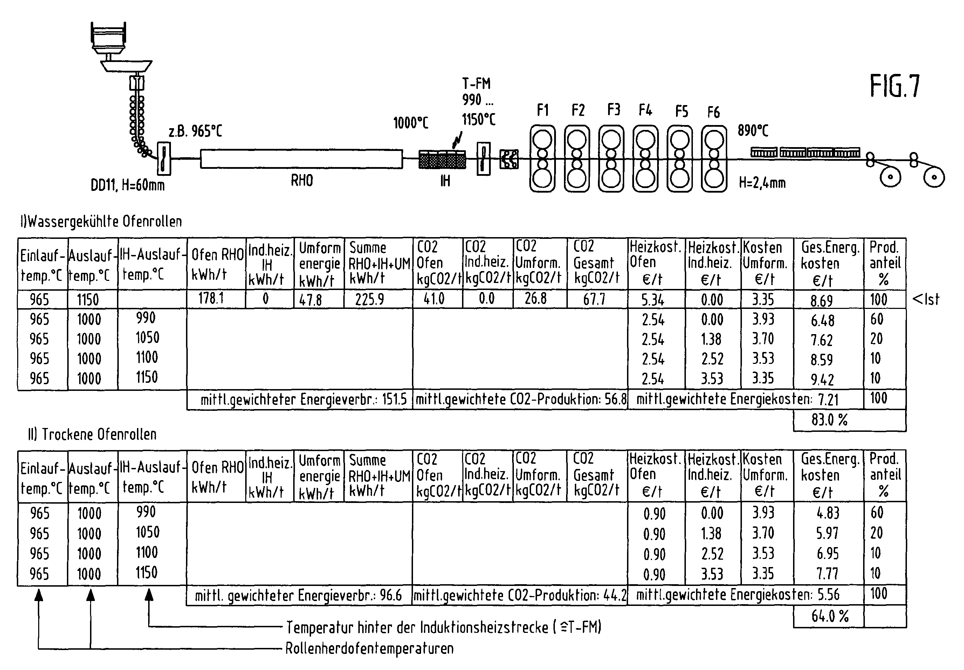

In Vergleich zu einer CSP-Anlage nach dem Stand der Technik gemäß Fig. 1 bzw. Fig. 2 wird in Fig. 7 der Effekt der geänderten Temperaturführung deutlich. Der Energieverbrauch, die CO₂-Emissionen und die Energiekosten sind hier für verschiedene Varianten bzw. für verschiedene Fertigstraßen-Einlauftemperaturen T-FM dargestellt. Vereinfacht wird hier von dem gleichen Walzprozess ausgegangen (Einlaufdicke = 60 mm, Austrittsdicke = 2,4 mm), damit der Temperatureffekt bzw. der Heizeffekt deutlich wird. In der Tabelle wird der Produktionsanteil der Bänder mit unterschiedlichen Fertigstraßen-Eintrittstemperaturen T-FM unterschieden. Als Referenzposition für die Temperatur T-FM ist hier hinter der Induktionsheizung IH gegeben. Beispielsweise müssen 60 % der Dünnbrammen nicht aufgeheizt werden (T-FM = 990 °C), 20 % der Brammen werden induktiv von der Ofentemperatur 1.000 °C auf 1.050 °C, 10 % auf 1.100 °C und 10 % auf 1.150 °C aufgeheizt. Bildet man die Summe der Anteile, ergibt sich das Gesamtergebnis. Eine erfolgreiche Anwendung dieser Optimierungsmethode ergibt also für den dargestellten Produktmix eine Verminderung der Energiekosten, des Energieverbrauchs sowie der CO₂-Emssionen. Die Energiekosten reduzieren sich z. B. auf 83 % des ursprünglichen Niveaus der Fahrweise nach Fig. 1, bei dem eine konstante Ofentemperatur von 1.150 °C anlag.

Vorzugsweise wird die Methode, durch Temperaturminimierung Energie einzusparen, kombiniert mit dem Einsatz von Energie sparenden trockenen Ofenrollen. Wird generell der Rollenherdofen 3 (oder bei einer 2-Strang-Anlage beide Öfen) auf Temperaturen kleiner als 1.050 °C bis 1.100 °C betrieben, können vorteilhafter Weise alle Rollen aus energieoptimalen trockenen Ofenrollen ausgeführt sein. Weiterhin stellt sich ein kleinerer Ofenrollenverschleiß ein oder es können einfachere, kostengünstigere Ofenrollenmaterialien verwendet werden. Die Wirkung der trockenen Ofenrollen bei sonst gleichen Bedingungen ist in Fig. 7 "II) Trockene Ofenrollen" dargestellt. Der Energieverbrauch halbiert sich hierdurch bei diesem Beispiel und auch die Energiekosten sinken so weiter auf z.B. 64 % des ursprünglichen Wertes.

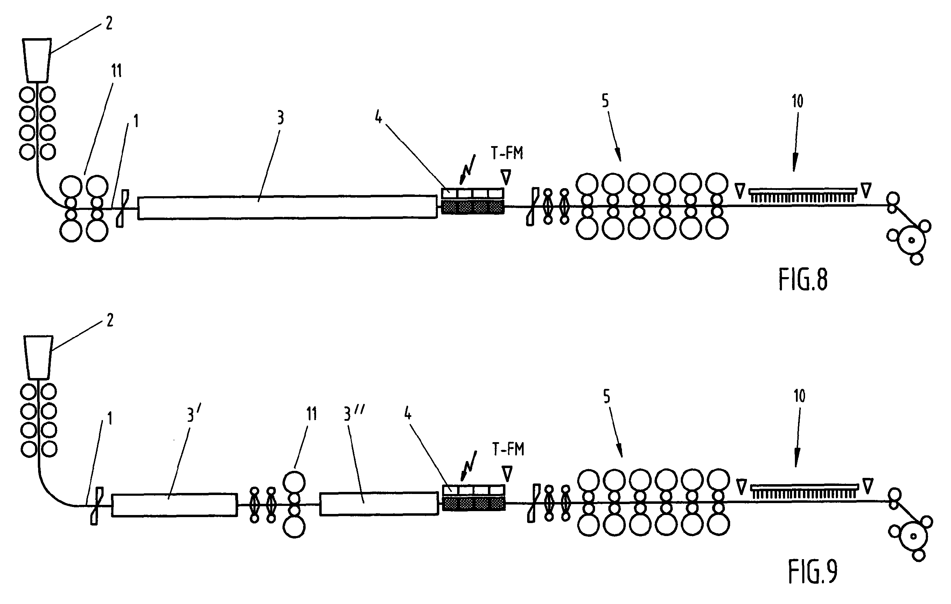

Das beschriebene Verfahren zur Minimierung des Energieverbrauchs, der CO₂-Emissionen und der Energiekosten durch Einstellung der optimalen Fertigstraßen-Eintrittstemperatur T-FM kann nicht nur in kompakten CSP-Anlagen Anwendung finden, sondern auch in CSP-Anlagen mit Vorgerüst(en) hinter der Stranggießanlage oder innerhalb des Rollenherdofens. Derartige Varianten sind in den Figuren 8 und 9 dargestellt, wo ein Walzgerüst 11 vor dem Rollenherdofen 3 eingesetzt wird (Fig. 8) bzw. wo der Rollenherdofen 3 in zwei Teilöfen 3' und 3" aufgeteilt ist, wobei zwischen diesen ein Walzgerüst 11 angeordnet ist.

Gleichermaßen ist eine Nutzung des Verfahrens bei Dünnband-Gießwalzanlagen mit ähnlichem Design sowie auch in konventionellen Produktionsanlagen bestehend aus Dickbrammengießanlage, Dickbrammenofen, Vorgerüsten und Induktionsheizung hinter dem Ofen oder vor der Fertigwalzstraße möglich. Bei einer Anlage mit Vorgerüsten wird die Vorgerüst-Abnahme oder/und Vorgerüst-Walzgeschwindigkeit zur weiteren Beeinflussung und Optimierung der Fertigstraßen-Einlauftemperatur T-FM einbezogen. Statt eines Rollenherdofens 3 kann auch alternativ oder teilweise eine passive oder aktive Rollgangskapselung Anwendung finden.

Vorzugsweise wird das Verfahren jedoch in einer Gießwalzanlage (CSP-Anlage) eingesetzt in der Metallbrammen bzw. Dünnbrammen bevorzugt in einem Dickenbereich von 30 - 120 mm und besonders bevorzugt in einem Dickenbereich von 45 -90 mm eingesetzt bzw. gegossen werden.

Bei Nichtnutzung der gesamten Induktionsheizung 4 oder Nichtnutzung von Teilen der Induktionsheizstrecke ist vorgesehen, diesen Bereich des Rollgangs wärmetechnisch zu kapseln, damit die Temperaturverluste dort minimiert werden. Hierzu sind die gesamte Induktionsheizstrecke oder die einzelnen Module der Induktionsheizung und der Rollgangskapselung quer verschiebbar ausgeführt. Entweder steht die Induktionsheizung oder eine optimal gedämmte Rollgangskapselung in der Transportlinie zur Walzstraße. Alternativ oder zusätzlich kann auch die Induktionsheizung mit einer integrierten Dämmung ausgeführt werden.

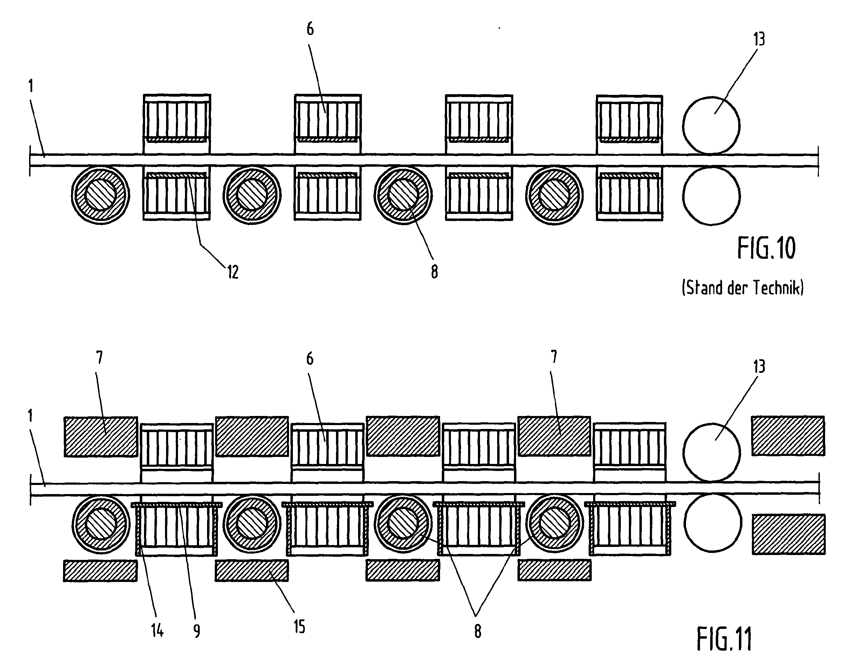

Die Induktionsheizung 4 ist ein Element, mit dem auf relativ kurzer Strecke einer Dünnbramme viel Energie zugeführt werden kann. Während der induktiven Erwärmung strahlt die Dünnbramme jedoch gleichzeitig Energie an die Umgebung, Rollgangsrolle und gekühlte Induktionsheizungsverkleidung ab. Durch diese Verluste reduziert sich der effektive Wirkungsgrad der Induktionsheizung 4. Die gängige Konstruktion einer Induktionsheizungsstrecke zeigt Fig. 10 (Stand der Technik). Zu erkennen sind Induktionsspulen 6 mit einer Platte 12 zur Spulenabdeckung. Die Induktorenverkleidung wird gekühlt, damit sich die Induktionsspule nicht überhitzt. Ferner zu sehen sind Rollgangsrollen 8 und Treiberrollen 13.

Um den effektiven Wirkungsgrad zu erhöhen bzw. im Bereich der Induktionsheizung die Temperaturverluste zu reduzieren, wird vorgeschlagen, innerhalb der Induktionsheizungsstrecke gleichzeitig eine Wärmedämmung anzuordnen, wie es Fig. 11 zeigt. Als Dämmeinrichtung sind Wärmedämmkassetten 7 oben zwischen den Induktoren, wärmegedämmte Rollgangsrollen 8 (Scheibenrollen mit Isolierung dazwischen) und dünne Wärmedämmplatten oder -matten 9 vor den Induktoren 6 vorgesehen (kann unten und oben angeordnet sein).

Das Dämmmaterial besteht vorzugsweise aus temperaturbeständigem, keramischem Material mit niedriger Wärmeleitfähigkeit, Dichte und spezifischer Wärme. Die Dämmkassetten können auch mit dünnem, temperaturbeständigem Blech verkleidet sein.

Die Wärmedämmkassetten 7 zwischen den Induktoren 6 können optional in der Höhe verstellbar bzw. ausfahrbar ausgeführt sein, um z. B. einer asymmetrischer Erwärmung der Dünnbramme 1 und/oder eventueller Brammenwölbung zu begegnen.

Eine Dämmung 14 ist auch zwischen der Rolle 8 und der Induktionsspule 7 vorgesehen.

Um Temperaturverluste der Rolle 8 nach unten zu reduzieren, kann auch unter der Rolle eine Dämmung 15 vorgesehen sein.

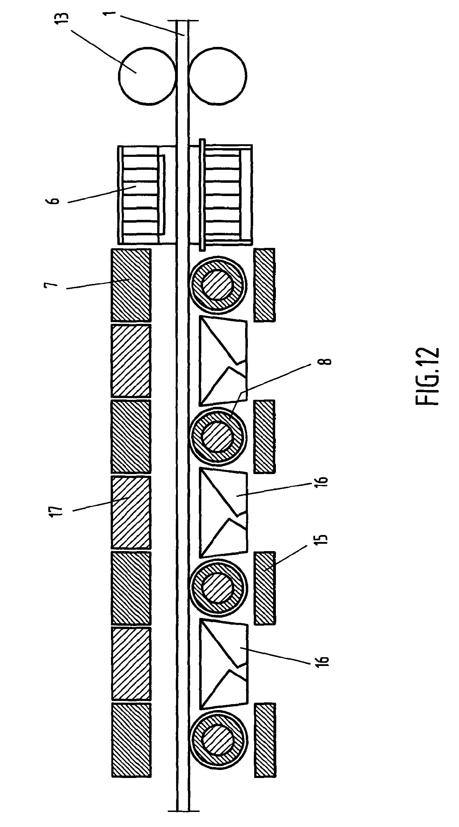

Bei Nichtnutzung der Induktionsspulen 6 können diese Bereiche durch Dämmhauben 16, 17 durch z. B. seitliches Verschieben ausgetauscht werden, wie es Fig. 12 zeigt. Zu erkennen sind hier weiterhin die trichterförmig angeordneten Dämmhauben 16 auf der Unterseite. Hierdurch wird das Herabrutschen des Zunders begünstigt und so Zunderansammlungen auf den unteren Dämmhauben vermieden. Durch zeitweises Rütteln an den unteren Dämmhauben 16 quer zur Transportrichtung der Bramme 1 wird das Abrutschen herabfallenden Zunders zusätzlich verbessert. Dieser Rüttelvorgang kann durch den ohnehin vorhandenen Querverfahrantrieb der Dämmhaube erfolgen, mittels Ändern der Geschwindigkeit des Antriebs oder bevorzugt durch eine Bewegung auf unebener Transportstrecke bei Nutzung des Quertransports. Alternativ kann der Zunder von Zeit zu Zeit mittels einer Abblaseeinrichtung heruntergeblasen werden. Alle Maßnahmen zur Zunderbeseitigung und somit Vermeidung von Ablagerungen können für die verfahrbaren Dämmeinheiten als auch für die feststehenden Dämmhauben auf der Unterseite in ähnlicher Art erfolgen.

Zusätzlich zur Dämmung innerhalb der Induktionsheizung ist eine Dämmung zwischen dem Rollenherdofen und der Induktionsheizung sowie hinter der Induktionsheizungsstrecke vorgesehen. Hierdurch wird vorteilhafterweise die Abkühlung der Oberfläche reduziert und der Effekt der Induktionsheizung unterstützt.

Da die Induktionsheizung mit integrierter Dämmung relativ gut gekapselt ist, kann diese Einrichtung auch optional unter einer Schutzgasatmosphäre (Stickstoff, Argon, Ofenrauchgase) betrieben werden, um die Verzunderung dort zu vermindern.

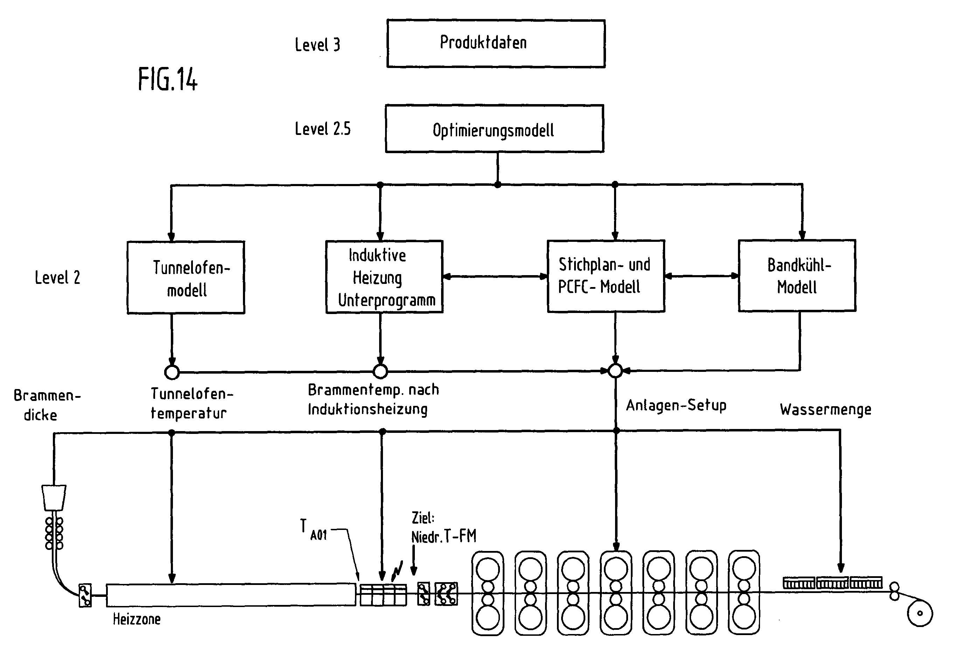

Die Komponenten des Optimierungsmodells bzw. das Zusammenspiel der verschiedenen Sub-Modelle zur Festlegung der Rollenherdofen-Austrittstemperatur T_{AO1} und der Fertigstraßen-Einlauftemperatur T-FM sind in Fig. 14 dargestellt. Dieses Modell bzw. diese Methode findet online, d. h. während dem laufenden Herstellungsprozess, Anwendung oder/und alternativ offline für vorbereitende Studienzwecke und vorteilhafterweise zur optimalen Walzprogrammplanung statt. Hierdurch können Bandgruppen ähnlicher Belastung bzw. Eigenschaften geeignet zusammengefasst werden, mit dem Ziel, Passagen gleicher minimaler Ofentemperatur T_{AO1} bzw. Fertigstraßen-Einlauftemperatur T-FM zu erzeugen, um den Energieverbrauch weiter zu minimieren.

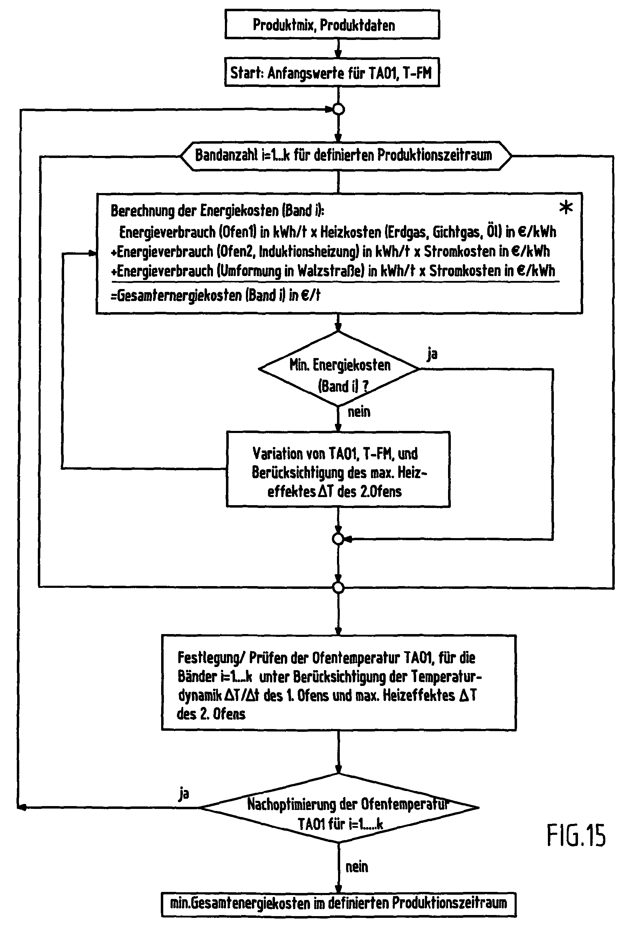

Der Ablauf der Optimierungsschritte zur Minimierung beispielsweise der Energiekosten wird in Fig. 15 illustriert. Die Hauptoptimierungsparameter sind dabei die Rollenherdofen-Austrittstemperatur T_{AO1} sowie die Fertigstraßen-Eintrittstemperatur T-FM. Für die Bänder K eines definierten Produktionszeitraums werden obige Parameter berechnet und iterativ die Temperaturen T_{AO1} und T-FM so variiert bzw. eingestellt, dass sich in Summe die minimalen Energiekosten ergeben.

Analog der Vorgehensweise zur Minimierung der Gesamtenergiekosten können optional auch die CO₂-Emissionen oder der Energieverbrauch minimiert werden. In dem Kasten in Fig. 15, der mit dem Stern markiert ist (*) müssen dazu nur die entsprechenden Parameter ausgetauscht werden.

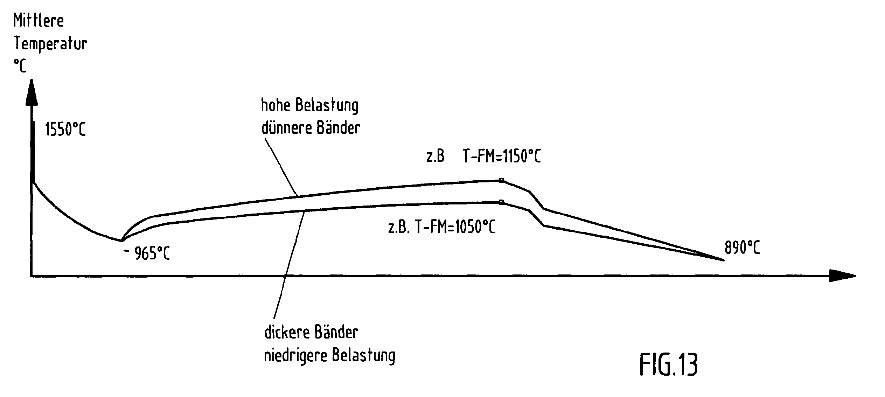

Die vorgeschlagene Verfahrensweise zur Minimierung des Energieverbrauchs, der CO₂-Emission und der Energiekosten kann auch ohne zweiten Ofen oder zweiter Ofengruppe (z. B. ohne Induktionsheizung 4) hinter dem Rollenherdofen 3 umgesetzt werden. Hierbei wird der Rollenherdofen 3 in Abhängigkeit der Fertigstraßenbedingungen (Fertigbanddicke, Belastung, Fertigbandtemperatur, notwendige Wassermenge in der Kühlstrecke etc.) auf eine minimale Fertigstraßen-Einlauftemperatur T-FM eingestellt. Dies geschieht dann nicht individuell für jede Dünnbramme, sondern es wird im Vorfeld der Walzprogrammaufbau betrachtet und unter Berücksichtigung der Ofenheizdynamik für das in der Zeitperiode kritische Produkt eine minimale Fertigstraßen-Einlauftemperatur T-FM gewählt, s. Fig. 13. Der Optimierungsalgorithmus ist hierfür der gleiche, jedoch ohne Energiebetrachtungen am zweiten Ofen. Die Wirksamkeit ist jedoch wegen der niedrigeren Ofenheizdynamik (im ersten Ofen) geringer.

Das oben dargelegte Rechenergebnis bezüglich der Einstellung der optimalen Rollenherdtemperatur und der induktiven Nachheizung und damit der Aufteilung der Heizung mit Brennstoff (Erdgas, Gichtgas, Öl) oder elektrisch, kann von Land zu Land unterschiedlich ausfallen, da die Kosten für Brennstoff und Strom stark variieren. Die zuvor dargestellten Fälle sind deshalb nur als Beispiel zu verstehen.

### Bezugszeichenliste:

- 1: Metallbramme / Vorband / Metallband
- 2: Stranggießanlage
- 3: erster Ofen (Rollenherdofen)
- 3': Teilofen
- 3": Teilofen
- 4: zweiter Ofen (Induktionsofen)
- 5: Walzwerk (Fertigstraße)
- 6: Induktionsspule
- 7: Wärmedämmkassette
- 8: Rollgangsrolle
- 9: Dämmplatte
- 10: Kühlstrecke
- 11: Walzgerüst(e)
- 12: Platte
- 13: Treiberrolle
- 14: Dämmung
- 15: Dämmung
- 16: Dämmung
- 17: Dämmung

- T_{FM} = T-FM: Eintrittstemperatur in das Walzwerk (hinter dem letzten Ofen vor der Fertigstraße)
- T_{AO1}: Austrittstemperatur aus dem ersten Ofen
- ΔT: Temperaturänderung
- ΔT/Δt: Temperaturgradient (Temperaturänderung pro Zeiteinheit)
- F: Förderrichtung

## Patentansprüche

1. Verfahren zur Herstellung eines Metallbandes (1) in einer Anlage, umfassend eine Stranggießanlage (2), einen sich In Förderrichtung (F) anschließenden ersten Ofen (3), einen sich in Förderrichtung (F) an den ersten Ofen (3) anschließenden zweiten Ofen (4) und ein sich in Förderrichtung (F) an den zweiten Ofen (4) anschließendes Walzwerk (5), wobei der erreichbare Temperaturgradient (ΔT/Δt) des ersten Ofens (3) kleiner ist als der erreichbare Temperaturgradient (ΔT/Δt) des zweiten Ofens (4),
**dadurch gekennzeichnet, dass**
das Verfahren die Schritte aufweist:
a) Festlegen eines herzustellenden Produktionsumfangs an Metallbrammen oder Metallbändern (1) während eines definierten Produktionszeitraums, umfassend mindestens zwei unterschiedliche Metallbrammen oder Metallbänder (1);
b) Bestimmung der jeweiligen Eintrittstemperaturen (T_{FM}) in das Walzwerk (5) für zumindest einen Teil, vorzugsweise für alle zu produzierenden Metallbrammen oder Metallbänder (1) des definierten Produktionszeitraums;
c) Bestimmung einer Austrittstemperatur (T_{AO1}) aus dem ersten Ofen (3), wobei diese geringer gewählt wird als die höchste in Schritt b) bestimmte Eintrittstemperatur (T_{FM}) in das Walzwerk (5) und kleiner oder im wesentlichen gleich groß gewählt wird als die niedrigste in Schritt b) bestimmte Eintrittstemperatur (T_{FM}) in das Walzwerk (5);
d) Betrieb des ersten Ofens (3) in einer solchen Weise, dass die zu fertigenden Metallbrammen oder Metallbänder (1) mit der gemäß Schritt c) bestimmten Austrittstemperatur (T_{AO1}) den ersten Ofen (3) verlassen;
e) Erhitzen bzw. Nachheizen einer zu fertigenden Metallbramme oder eines zu fertigenden Metallbandes (1) mittels des zweiten Ofens (4) auf seine benötigte Eintrittstemperatur (T_{FM}) in das Walzwerk (5), sofern diese Temperatur über der Austrittstemperatur (T_{AO1}) des ersten Ofens (3) liegt, der gemäß Schritt d) erreicht wurde,
wobei der erste Ofen (3) so betrieben wird, dass die Austrittstemperatur (T_{AO1}) der Metallbramme oder des Metallbandes (1) maximal 1.125 °C beträgt, wobei im ersten Ofen (3) energiesparende trockene Ofenrollen verwendet werden.

2. Verfahren nach Anspruch 1, **dadurch gekennzeichnet, dass** in Schritt c) gemäß Anspruch 1 die Austrittstemperatur (T_{AO1}) aus dem ersten Ofen (3) im wesentlichen gleich groß gewählt wird wie die niedrigste in Schritt b) gemäß Anspruch 1 bestimmte Eintrittstemperatur (T_{FM}) in das Walzwerk (5).

3. Verfahren nach Anspruch 1 oder 2, **dadurch gekennzeichnet, dass** als erster Ofen (3) ein Rollenherdofen verwendet wird und/oder dass als zweiter Ofen (4) ein Induktionsofen oder ein DFI-Ofen (Direct Flame Impingement - Ofen) oder eine Kombination von Induktionsofen und DFI-Ofen verwendet wird.

4. Verfahren nach einem der Ansprüche 1 bis 3, **dadurch gekennzeichnet, dass** der zweite Ofen (4) so betrieben wird, dass die Temperaturerhöhung der Metallbramme oder des Metallbandes (1) maximal 100 °C beträgt.

5. Verfahren nach einem der Ansprüche 1 bis 4, **dadurch gekennzeichnet, dass** der erste Ofen (3) als Brammenspeicherofen verwendet wird.

6. Verfahren nach einem der Ansprüche 1 bis 5, **dadurch gekennzeichnet, dass** die Austrittstemperaturen (T_{AO1}) aus dem ersten Ofen (3) und die Eintrittstemperaturen (T_{FM}) in das Walzwerk (5) iterativ dergestalt festgelegt werden, dass die Energiekosten und/oder CO₂-Emissionen und/oder Energieverbräuche für die Herstellung von Warmbändern in der Summe für die ersten Ofen (3) und zweiten Ofen (4) und das Walzwerk (5) im definierten Produktionszeitraum minimal werden.

7. Verfahren nach einem der Ansprüche 1 bis 6, **dadurch gekennzeichnet, dass** die Bestimmung der Eintrittstemperaturen (T_{FM}) in das Walzwerk (5) gemäß Schritt b) von Anspruch 1 und/oder die Bestimmung der Austrittstemperaturen (T_{AO1}) aus dem ersten Ofen (3) gemäß Schritt c) von Anspruch 1 und/oder der Energieverbrauch und/oder die CO₂-Emissionen und/oder die Energiekosten für alle zu produzierenden Metallbrammen oder Metallbänder (1) mittels eines Rechenmodells erfolgt.

8. Verfahren nach Anspruch 7, **dadurch gekennzeichnet, dass** als Teilzielgröße bei der Berechnung zur Minimierung von Energiekosten und/oder CO₂-Emissionen und/oder Energieverbräuchen die Minimierung der Eintrittstemperatur (T_{FM}) in das Walzwerk (5) verwendet wird.

9. Verfahren nach Anspruch 7, **dadurch gekennzeichnet, dass** als Teilzielgröße bei der Berechnung zur Minimierung von Energiekosten und/oder CO₂-Emissionen und/oder Energieverbräuchen die minimale Ofenaustrittstemperatur (T_{AO1}) des ersten Ofens (3) verwendet wird.

10. Verfahren nach Anspruch 11, **dadurch gekennzeichnet, dass** als Teilzielgröße bei der Berechnung zur Minimierung von Energiekosten und/oder CO₂-Emissionen und/oder Energieverbräuchen die Minimierung der Temperatursteigerung (ΔT) im zweiten Ofen (4) verwendet wird.

11. Verfahren nach einem der Ansprüche 7 bis 10, **dadurch gekennzeichnet, dass** im Rechenmodell bei der Festlegung der optimalen Austrittstemperaturen (T_{AO1}) aus dem ersten Ofen (3) und Eintrittstemperaturen (T_{FM}) In das Walzwerk (5) die Prozess- und Anlagenlimits berücksichtigt werden.

12. Verfahren nach einem der Ansprüche 1 bis 11, **dadurch gekennzeichnet, dass** als erster Ofen (3) ein DFI-Ofen (Direct Flame Impingement - Ofen) verwendet wird.

13. Verfahren nach einem der Ansprüche 1 bis 12, **dadurch gekennzeichnet, dass** als erster Ofen (3) und/oder als zweiter Ofen (4) ein DFI-Ofen (Direct Flame Impingement - Ofen) verwendet wird. dessen Brenner und/oder Brennereinstellungen und/oder Flammenabstand von der Brammenoberfläche so gewählt werden, dass keine Aufschmelzungen des Zunders oder des Brammenmaterials an der Brammenoberfläche auftreten.

14. Verfahren nach einem der Ansprüche 1 bis 13, **dadurch gekennzeichnet, dass** als erster Ofen (3) und/oder als zweiter Ofen (4) ein DFI-Ofen (Direct Flame Impingement - Ofen) verwendet wird, dessen Brenner ausgebildet sind, die Bramme über die gesamte Breite gleichmäßig zu erhitzen, wozu die Brenner vorzugsweise durchgehend über ihrer Breite als Rechteckdüsen ausgebildet sind.

15. Verfahren nach einem der Ansprüche 1 bis 13, **dadurch gekennzeichnet, dass** als erster Ofen (3) und/oder als zweiter Ofen (4) ein DFI-Ofen (Direct Flame Impingement - Ofen) verwendet wird, dessen Brenner in Förderrichtung (F) mehrreihig ausgebildet sind, wobei die Brenner von Reihe zu Reihe versetzt angeordnet sind, wodurch sie in der Summe über der Breite eine gleichmäßige Erwärmung des Metallbandes (1) hervorrufen.

16. Verfahren nach einem der Ansprüche 1 bis 15, **dadurch gekennzeichnet, dass** die Metallbramme oder das Metallband (1) vor dem ersten Ofen (3) einer Vorwalzoperation unterzogen wird.

17. Verfahren nach einem der Ansprüche 1 bis 16, **dadurch gekennzeichnet, dass** der erste Ofen (3) in zwei Teilöfen (3', 3") unterteilt ist und dass die Metallbramme oder das Metallband (1) zwischen den beiden Teilöfen (3', 3") einer Walzoperation unterzogen wird.

18. Verfahren nach einem der Ansprüche 1 bis 17, **dadurch gekennzeichnet, dass** im Falle der Nichtbenutzung des zweiten Ofens (4) oder zumindest von einzelnen Modulen des Ofens (4) dieser bzw. diese aus der Produktionslinie herausbewegt wird bzw. werden und an seine bzw. ihre Stelle eine Rollgangskapselung verbracht wird.

19. Verfahren nach einem der Ansprüche 1 bis 18, **dadurch gekennzeichnet, dass** vorzugsweise in einer Gießwalzanlage (CSP-Anlage) Metallbrammen bzw. Dünnbrammen bevorzugt in einem Dickenbereich von 30 - 120 mm und besonders bevorzugt in einem Dickenbereich von 45 - 90 mm eingesetzt werden.

## Claims

1. Method of producing a metal strip (1) in a plant, comprising a continuous casting plant (2), a first furnace (3) adjoining in conveying direction (F), a second furnace (4) adjoining the first furnace (3) in conveying direction (F) and a rolling mill (5) adjoining the second furnace (4) in conveying direction (F), wherein the attainable temperature gradient (AT/At) of the first furnace (3) is smaller than the attainable temperature gradient (ΔT/Δt) of the second furnace (4).
**characterised in that**
the method comprises the steps of:
a) establishing a scope of production, which is to be effected, of metal slabs or metal strips (1) during a defined production time period, comprising at least two different metal slabs or metal strips (1);
b) determining the respective entry temperatures (T_{FM}) into the rolling mill (5) for at least a part - preferably all - metal slabs or metal strips (1), which are to be produced, of the defined production time period;
c) determining an exit temperature (T_{AO1}) from the first furnace (3), wherein this is selected to be smaller than the highest entry temperature (T_{FM}), which is determined in step b), into the rolling mill (5) and selected to be smaller than or substantially the same as the lowest entry temperature (T_{FM}), which is determined in step b), into the rolling mill (5);
d) operating the first furnace (3) in such a manner that the metal slabs or metal strips (1) to be produced leave the first furnace (3) with the exit temperature (T_{AO1}) determined in accordance with step c); and
e) heating or reheating a metal slab, which is to be produced, or a metal strip (1), which is to be produced, by means of the second furnace (4) to its requisite entry temperature (T_{FM}) into the rolling mill (5) insofar as this temperature lies above the exit temperature (T_{AO1}), which was determined in accordance with step (d), of the first furnace (3),
wherein the first furnace (3) is operated so that the exit temperature (T_{AO1}) of the metal slab or the metal strip (1) is at most 1,125° C, wherein energy-saving, dry furnace rollers are used in the first furnace (3).

2. Method according to claim 1, characterised that in step c) according to claim 1 the exit temperature (T_{AO1}) from the first furnace (3) is selected to be substantially the same size as the lowest entry temperature (T_{FM}), which is determined in step b) according to claim 1, into the rolling mill (5).

3. Method according to claim 1 or 2, **characterised in that** a roller hearth furnace is used as the first furnace (3) and/or an induction furnace or a DFI furnace (Direct Flame Impingement furnace) or a combination of induction furnace and DFI furnace is used as the second furnace (4).

4. Method according to any one of claims 1 to 3, **characterised in that** the second furnace (4) is operated so that the temperature increase of the metal slab or the metal strip (1) is at most 100° C.

5. Method according to any one of claims 1 to 4, **characterised in that** the first furnace (3) is used as a slab storage furnace.

6. Method according to any one of claims 1 to 5, **characterised in that** the exit temperatures (T_{AO1}) from the first furnace (3) and the entry temperatures (T_{FM}) into the rolling mill (5) are iteratively determined in such a manner that the energy costs and/or CO₂ emissions and/or energy consumptions for production of hot strips are in total at a minimum in the defined production time period for the first furnace (3) and the second furnace (3) and the rolling mill (5).

7. Method according to any one of claims 1 to 6, **characterised in that** the determination of the entry temperatures (T_{FM}) into the rolling mill (5) according to step b) of claim 1 and/or the determination of the exit temperatures (T_{AO1}) from the first furnace (3) according to step c) of claim 1 and/or the energy consumption and/or the CO₂ emissions and/or the energy costs for all metal slabs or metal strips (1) to be produced is carried out by means of a computation model.

8. Method according to claim 7, **characterised in that** minimisation of the entry temperature (T_{FM}) into the rolling mill (5) is used as part target magnitude in the calculation for minimisation of energy costs and/or CO₂ emissions and/or energy consumptions.

9. Method according to claim 7, **characterised in that** minimum furnace outlet temperature (T_{AO1}) of the first furnace (3) is used as part target magnitude in the calculation for minimisation of energy costs and/or CO₂ emissions and/or energy consumptions.

10. Method according to claim 11, **characterised in that** minimisation of the temperature rise (ΔT) in the second furnace (4) is used as part target magnitude in the calculation for minimisation of energy costs and/or CO₂ emissions and/or energy consumptions.

11. Method according to any one of claims 7 to 10, **characterised in that** the process and plant limits are taken into consideration in the computation model for determination of the optimum exit temperatures (T_{AO1}) from the first furnace (3) and entry temperatures (T_{FM}) into the rolling mill (5).

12. Method according to any one of claims 1 to 11, **characterised in that** a DFI furnace (Direct Flame Impingement furnace) is used as the first furnace (3).

13. Method according to any one of claims 1 to 12, **characterised in that** use is made as the first furnace (3) and/or the second furnace (4) of a DFI furnace (Direct Flame Impingement furnace), the burners of which and/or burner settings and/or flame spacing from the slab surface is or are so selected that melting of the scale or of the slab material at the slab surface does not occur.

14. Method according to any one of claims 1 to 13, **characterised in that** use is made as the first furnace (3) and/or the second furnace (4) of a DFI furnace (Direct Flame Impingement furnace), the burners of which are constructed to uniformly heat the slab over the entire width, for which purpose the burners are preferably constructed continuously over the width thereof as rectangular nozzles.

15. Method according to any one of claims 1 to 13, **characterised in that** use is made as the first furnace (3) and/or the second furnace (4) of a DFI furnace (Direct Flame Impingement furnace), the burners of which are of multi-row construction in conveying direction (F), wherein the burners are arranged to be offset from row to row, whereby in sum over the width they produce uniform heating of the metal strip (1).

16. Method according to any one of claims 1 to 15, **characterised in that** the metal slab or the metal strip (1) is subjected to a pre-rolling operation upstream of the first furnace (3).

17. Method according to any one of claims 1 to 16, **characterised in that** the first furnace (3) is divided into two sub-furnaces (3', 3") and that the metal slab or the metal strip (1) is subjected to a rolling operation between the two sub-furnaces (3', 3").

18. Method according to any one of claims 1 to 17, **characterised in that** in the case of non-use of the second furnace (4) or at least of individual modules of the furnace (4) this or these is or are moved out of the production line and a roller path encapsulation is brought into its or their place.

19. Method according to any one of claims 1 to 18, **characterised in that** metal slabs or thin slabs preferably in a thickness range of 30 to 120 millimetres and particularly preferably in a thickness range of 45 to 90 millimetres are preferably used in a castingrolling plant (CSP plant).

## Revendications

1. Procédé pour la fabrication d'une bande métallique (1) dans une installation, comprenant une installation de coulée continue (2), un premier four (3) qui s'y raccorde dans la direction de transport (F), un deuxième four (4) qui se raccorde au premier four (3) dans la direction de transport (F) et un laminoir (5) qui se raccorde au deuxième four (4) dans la direction de transport (F), le gradient de température (ΔT/Δt) que l'on peut atteindre dans le premier four (3) étant inférieur au gradient de température (ΔT/Δt) que l'on peut atteindre dans le deuxième four (4) ;
**caractérisé en ce que** le procédé présente les étapes dans lesquelles :
a) on fixe un volume de production à réaliser en ce qui concerne des brames métalliques ou des bandes métalliques (1) au cours d'un intervalle de production défini, comprenant au moins deux brames métalliques ou deux bandes métalliques différentes (1) ;
b) on détermine les températures d'entrée respectives (T_{FM}) dans le laminoir (5) pour au moins une partie, de préférence pour la totalité des brames métalliques ou des bandes métalliques (1) à produire dans l'intervalle de production défini ;
c) on détermine une température de sortie (T_{AO1}) du premier four (3), cette température étant sélectionnée pour être inférieure à la température d'entrée maximale (T_{FM}), déterminée à l'étape b), dans le laminoir (5), et étant sélectionnée pour être inférieure ou essentiellement égale à la température d'entrée (T_{FM}) la plus basse, déterminée à l'étape b), dans le laminoir (5) ;
d) on actionne le premier four (3) dans un mode tel que les brames métalliques ou les bandes métalliques à fabriquer (1) quittent le premier four (3) avec la température de sortie (T_{AO1}) déterminée conformément à l'étape c) ;
e) on chauffe, respectivement on soumet à un chauffage ultérieur une brame métallique à fabriquer ou une bande métallique à fabriquer (1) au moyen du deuxième four (4) jusqu'à sa température d'entrée requise (T_{FM}) dans le laminoir (5), pour autant que cette température soit supérieure à la température de sortie (TAO1) du premier four (3), qui a été atteinte conformément à l'étape d) ;
dans lequel le premier four (3) est mis en service d'une manière telle que la température de sortie (T_{AO1}) de la brame métallique ou de la bande métallique (1) s'élève au maximum à 1125 °C, des rouleaux de four travaillant à sec permettant d'économiser de l'énergie étant utilisés dans le premier four (3).

2. Procédé selon la revendication 1, **caractérisé en ce que**, à l'étape c), conformément à la revendication 1, on sélectionne la température de sortie (T_{AO1}) du premier four (3) pour qu'elle soit essentiellement égale à la température d'entrée la plus basse, déterminée à l'étape b), conformément à la revendication 1, dans le laminoir (5).

3. Procédé selon la revendication 1 ou 2, **caractérisé en ce que**, à titre de premier four (3), on utilise un four à sole munie de rouleaux et/ou **en ce qu'**on utilise, à titre de deuxième four (4), un four à induction ou un four DFI (four à contact direct avec flamme) ou une combinaison d'un four à induction et d'un four DFI.

4. Procédé selon l'une quelconque des revendications 1 à 3, **caractérisé en ce qu'**on met le deuxième four (4) en service d'une manière telle que l'élévation de la température de la brame métallique ou de la bande métallique (1) représente au maximum 100 °C.

5. Procédé selon l'une quelconque des revendications 1 à 4, **caractérisé en ce qu'**on utilise le premier four (3) à titre de four à accumulation pour des brames.

6. Procédé selon l'une quelconque des revendications 1 à 5, **caractérisé en ce qu'**on fixe les températures de sortie (T_{AO1}) du premier four (3) et les températures d'entrée (T_{FM}) dans le laminoir (5) par voie itérative, d'une manière telle que l'on réduit à un minimum les coûts liés à l'énergie et/ou les émissions de CO₂ et/ou les consommations d'énergie pour la fabrication des bandes à chaud au total pour le premier four (3) et pour le deuxième four (4) et pour le laminoir (5) dans l'intervalle de production défini.

7. Procédé selon l'une quelconque des revendications 1 à 6, **caractérisé en ce que** la détermination des températures d'entrée (T_{FM}) dans le laminoir (5) conformément à l'étape b) de la revendication 1 et/ou la détermination des températures de sortie (T_{AO1}) du premier four (3) conformément à l'étape c) de la revendication 1 et/ou la consommation d'énergie et/ou les émissions de CO₂ et/ou les coûts énergétiques pour la totalité des brames métalliques ou des bandes métalliques (1) à fabriquer, au moyen d'un modèle mathématique.

8. Procédé selon la revendication 7, **caractérisé en ce que**, à titre de valeur d'objectif partiel lors du calcul pour minimiser les coûts énergétiques et/ou les émissions de CO₂ et/ou les consommations d'énergie, on utilise la minimisation de la température d'entrée (T_{FM}) dans le laminoir (5).

9. Procédé selon la revendication 7, **caractérisé en ce que**, à titre de valeur d'objectif partiel lors du calcul pour minimiser les coûts énergétiques et/ou les émissions de CO₂ et/ou les consommations d'énergie, on utilise la température de sortie du four minimale (T_{AO1}) du premier four (3).

10. Procédé selon la revendication 7, **caractérisé en ce que**, à titre de valeur d'objectif partiel lors du calcul pour minimiser les coûts énergétiques et/ou les émissions de CO₂ et/ou les consommations d'énergie, on utilise la minimisation de l'élévation de température (ΔT) dans le deuxième four (4).

11. Procédé selon l'une quelconque des revendications 7 à 10, **caractérisé en ce qu'**on prend en compte, dans le modèle mathématique lors de la fixation des températures de sortie optimales (T_{AO1}) du premier four (3) et des températures d'entrée (T_{FM}) dans le laminoir (5), les limites du processus et de l'installation.

12. Procédé selon l'une quelconque des revendications 1 à 11, **caractérisé en ce que**, à titre de premier four (3), on utilise un four DFI (four à contact direct avec flamme).

13. Procédé selon l'une quelconque des revendications 1 à 12, **caractérisé en ce que**, à titre de premier four (3) et/ou à titre de deuxième four (4), on utilise un four DFI (four à contact direct avec flamme), dont les brûleurs et/ou les réglages des brûleurs et/ou la distance des flammes par rapport à la surface des brames sont sélectionnés d'une manière telle que l'on n'est pas confronté à des mises en fusion de la calamine ou de la matière des brames à la surface des brames.

14. Procédé selon l'une quelconque des revendications 1 à 12, **caractérisé en ce que**, à titre de premier four (3) et/ou à titre de deuxième four (4), on utilise un four DFI (four à contact direct avec flamme), dont les brûleurs sont réalisés pour chauffer la brame d'une manière uniforme sur toute sa largeur, les brûleurs étant réalisés à cet effet de préférence en continu sur leur largeur, sous la forme de buses rectangulaires.

15. Procédé selon l'une quelconque des revendications 1 à 13, **caractérisé en ce que**, à titre de premier four (3) et/ou à titre de deuxième four (4), on utilise un four DFI (four à contact direct avec flamme), dont les brûleurs sont réalisés sous la forme de plusieurs rangées dans la direction de transport (F), les brûleurs étant disposés en décalage d'une rangée à l'autre, si bien qu'ils donnent lieu au total à un réchauffement uniforme de la bande métallique (1) sur la largeur.

16. Procédé selon l'une quelconque des revendications 1 à 15, **caractérisé en ce qu'**on soumet la brame métallique ou la bande métallique (1), avant le premier four (3), à une opération de prélaminage.

17. Procédé selon l'une quelconque des revendications 1 à 16, **caractérisé en ce que** le premier four (3) est subdivisé en deux fours partiels (3', 3") et **en ce qu'**on soumet la brame métallique ou la bande métallique (1) entre les deux fours partiels (3', 3") à une opération de laminage.

18. Procédé selon l'une quelconque des revendications 1 à 17, **caractérisé en ce que**, dans le cas d'une non utilisation du deuxième four (4) ou au moins de modules individuels du four (4), celui-ci, respectivement ceux-ci est, respectivement sont retiré(s) de la ligne de production, et on le remplace, respectivement on les remplace par une enceinte de transporteur à rouleaux.

19. Procédé selon l'une quelconque des revendications 1 à 18, **caractérisé en ce qu'**on enfourne, de préférence dans une installation de laminage en coulée continue (installation CSP), des brames métalliques, respectivement des brames minces de préférence dans une plage d'épaisseur de 30 à 120 mm et de manière particulièrement préférée dans une plage d'épaisseur de 45 à 90 mm.
